# EUROPEAN PATENT APPLICATION

(11) **EP 4 393 701 A1**
(43) Date of publication of application: **03.07.2024**
(21) Application number: 22860613.3
(22) Date of filing: 26.08.2022
(51) Int. Cl.: B32B 27/32, B32B 27/30, B65D 65/00

(54) **BARRIER LAYER FOR PACKAGING, SHEET-LIKE COMPOSITE LAYER, AND PACKAGING CONTAINER THEREOF**

(30) Priority: 26.08.2021 CN 202110989663
(71) Applicant: SIG Combibloc (Suzhou) Co. Ltd., Suzhou, Jiangsu 215126 (CN)
(72) Inventor: LIU, Yan, Suzhou, Jiangsu 215126 (CN); LUO, Rensheng, Suzhou, Jiangsu 215126 (CN); SHA, Haitao, Suzhou, Jiangsu 215126 (CN); ZHU, Xiangyang, Suzhou, Jiangsu 215126 (CN)
(74) Representative: Herzog IP Patentanwalts GmbH
(86) International application number: PCT/CN2022/114982
(87) International publication number: WO 2023/025267

(57) **Abstract**

A barrier layer for packaging, a sheet-like composite layer, and a packaging container thereof. A barrier layer (40) comprises: a base layer (41) mainly comprising a polyolefin material or a degradable polymer; and an additional layer (42) stacked with the base layer (41) and mainly comprising at least one of a metal oxide and a non-metal oxide, and polyvinyl alcohol. The barrier layer (40) can not only improve the water resistance and oxygen resistance of the existing packaging container, but also facilitate recycling and environmental friendliness.

## Description

For all purposes, the present application is based on and claims the priority of China Patent Application No. 202110989663.0 filed on August 26, 2021 and entitled "BARRIER LAYER FOR PACKAGING, SHEET-LIKE LAMINATE AND PACKAGING CONTAINER THEREOF", and the above-mentioned China patent application is hereby incorporated in its entirety by reference as a part of the present application.

### TECHNICAL FIELD

Embodiments of the present invention relate to a barrier layer for packaging, a sheet-like laminate and a packaging container thereof.

### BACKGROUND

In the field of packaging, metal foil materials such as aluminum foils are used as barrier layers for base layers in packaging containers for holding liquid foods such as fruit juice and yogurt. When the aluminum foil is used as a barrier material, it not only has excellent barrier property to prevent from penetration of oxygen and water, but also has light-shielding characteristics. However, the problem involved in metal foils such as aluminum foil lies in that, when it's subjected to a waste disposal as a garbage after its usage for packaging container, there is no appropriate waste disposal method, which is not convenient for recycling and hence causes environmental damage or other issues.

### SUMMARY

Embodiments of the present invention provide a barrier layer for packaging, a sheet-like laminate and a packaging container thereof, which can not only improve the water and oxygen barrier performance of the existing packaging container, but also be beneficial to recycling and be environmentally friendly.

According to first aspect of the present invention, it is provided a barrier layer for packaging, comprising: a base layer, mainly comprising a polyolefin material or a degradable polymer; and an additional layer, stacked with the base layer and mainly comprising polyvinyl alcohol and at least one selected from the group of a metal oxide and a non-metal oxide.

In at least some embodiments, the additional layer comprises: a first layer located on the base layer; and a second layer located at a side of the first layer away from the base layer, wherein a material of the second layer is different from a material of the first layer; wherein the first layer comprises the polyvinyl alcohol, and the second layer comprises at least one selected from the group of the metal oxide and the non-metal oxide.

In at least some embodiments, the polyvinyl alcohol is used as a matrix material of the additional layer, and at least one selected from the group of the metal oxide and the non-metal oxide is added into the matrix material.

In at least some embodiments, the barrier layer further comprises a light-shielding material, wherein: in a case that the base layer mainly comprises the polyolefin material, the light-shielding material is added into or applied onto at least one selected from the group of the base layer and the additional layer; or in a case that the base layer mainly comprises the degradable polymer, the light-shielding material is added into the additional layer or applied onto at least one selected from the group of the base layer and the additional layer.

In at least some embodiments, the polyolefin material comprises at least one selected from the group of high density polyethylene (HDPE), middle density polyethylene (MDPE), low density polyethylene (LDPE) and metallocene polyethylene (mPE); the degradable polymer comprises at least one selected from the group of a biodegradable polymer, a photodegradable polymer and a photo-biodegradable polymer; the metal oxide is aluminum oxide, and the non-metal oxide is silicon oxide.

In at least some embodiments, an oxygen transmission rate of the barrier layer is from 0.01 cm3/24 hours to 0.5 cm3/24 hours at 23°C and 50% relative humidity.

In at least some embodiments, a Vicat softening temperature of the base layer is from 60°C to 150°C; a melt flow index of the base layer is from 1 g/10min to 25 g/10min; and a melting temperature of the base layer is from 90°C to 140°C.

According to second aspect of the present invention, it is provided a sheet-like laminate for packaging, comprising the following layers stacked in sequence along a first direction from an outer surface of the sheet-like laminate to an inner surface of the sheet-like laminate: an outer covering layer, and the afore-mentioned barrier layer.

In at least some embodiments, the additional layer and the base layer are stacked in sequence along the first direction; the base layer comprises: a first portion adjacent to the additional layer; and a second portion away from the additional layer, wherein a material of the second portion is different from a material of the first portion.

In at least some embodiments, the outer covering layer mainly comprises the polyolefin material or the degradable polymer.

In at least some embodiments, the first portion mainly comprises high density polyethylene (HDPE) or the first portion mainly comprises a mixture of low density polyethylene (LDPE) and middle density polyethylene (MDPE), wherein the middle density polyethylene (MDPE) accounts for 30%-80% by weight of the mixture; the second portion mainly comprises a mixture of low density polyethylene (LDPE) and metallocene polyethylene (mPE); and the outer covering layer mainly comprises low density polyethylene (LDPE).

In at least some embodiments, the first portion, the second portion and the outer covering layer all comprise the degradable polymer.

In at least some embodiments, a density of the outer covering layer is from 0.89 g/m3 to 0.98 g/m3; a Vicat softening temperature of the outer covering layer is higher than a Vicat softening temperature of the base layer, the Vicat softening temperature of the outer covering layer is from 90°C to 150°C, and the Vicat softening temperature of the base layer is from 60°C to 150°C; a melt flow index of the outer covering layer is from 1 g/10min to 25 g/10min; and a melting temperature of the outer covering layer is from 80°C to 155°C.

In at least some embodiments, a total gram weight of the base layer is 10% to 40% of a total gram weight of the sheet-like laminate.

In at least some embodiments, the total gram weight of the base layer is from 35 g/m2 to 60 g/m2.

In at least some embodiments, a total gram weight of the outer covering layer and the base layer is 12.9% to 53.3% of a total gram weight of the sheet-like laminate.

In at least some embodiments, the total gram weight of the outer covering layer and the base layer is from 45 g/m2 to 80 g/m2.

In at least some embodiments, the sheet-like laminate further comprises: a carrier layer, located between the outer covering layer and the barrier layer along the first direction.

In at least some embodiments, the carrier layer comprises fibrillated cellulose, or the carrier layer comprises polyvinyl alcohol, or the carrier layer comprises polyvinyl alcohol added with a metal oxide.

In at least some embodiments, the sheet-like laminate further comprises: a printed layer, located between the carrier layer and the outer covering layer along the first direction, or located at a side of the outer covering layer away from the carrier layer along the first direction.

In at least some embodiments, the printed layer comprises ink, and the ink comprises an inorganic solvent or an organic solvent, and the inorganic solvent is water.

In at least some embodiments, a longitudinal stiffness of the sheet-like laminate is from 8 mN*m to 10 mN*m.

According to third aspect of the present invention, it is provided a packaging container, obtained by creasing the afore-mentioned sheet-like laminate.

In at least some embodiments, the packaging container comprises: a bottom portion and a top portion; and a sidewall, provided between the bottom portion and the top portion; wherein the sidewall comprises a seam formed by sealing the sheet-like laminate itself, and the seam extends in a second direction from the bottom portion to the top portion, and the second direction is perpendicular to the first direction.

In at least some embodiments, the sheet-like laminate further comprises a carrier layer; the carrier layer is located between the barrier layer and the outer covering layer along the first direction, and the carrier layer comprises fibrillated cellulose, and an extension direction of the fibrillated cellulose is parallel to a plane where the sheet-like laminate is located and is perpendicular to the second direction.

In at least some embodiments, the packaging container further comprises: an opening, provided in the top portion; and a sealing member, configured to seal the opening; wherein a material of the sealing member is as same as a material of the outer covering layer, and both the material of the sealing member and the material of the outer covering layer mainly comprise a polyolefin material or a degradable polymer.

In at least some embodiments, the packaging container further comprises: a straw and a wrapping covering the straw, wherein the straw is connected to the sidewall by the wrapping; wherein a material of the wrapping is as same as a material of the outer covering layer, and both the material of the wrapping and the material of the outer covering layer mainly comprise a polyolefin material or a degradable polymer.

In at least some embodiments, a sealing strength at the top portion is less than a sealing strength at the bottom portion, and the sealing strength at the top portion is from 11 N to 26 N.

In at least some embodiments, a forming coefficient of the packaging container is from 1.0 m2/kg to 10.0 m2/kg.

### BRIEF DESCRIPTION OF THE DRAWINGS

In order to more clearly illustrate the technical solutions of the embodiments of the present disclosure, the drawings of the embodiments will be briefly described in the following; it is obvious that the described drawings are only related to some embodiments of the present disclosure and thus are not limitative to the present disclosure.
FIG. 1 is a schematic structural diagram of a barrier layer provided by an embodiment of the present invention;
FIG. 2 is a schematic structural diagram of another barrier layer provided by an embodiment of the present invention;
FIG. 3 is a schematic structural diagram of a sheet-like laminate provided by an embodiment of the present invention;
FIG. 4 is a schematic structural diagram of another sheet-like laminate provided by an embodiment of the present invention;
FIG. 5 is a schematic structural diagram of yet another sheet-like laminate provided by an embodiment of the present invention;
FIG. 6A is a schematic structural diagram of a packaging container provided by an embodiment of the present invention;
FIG. 6B is a schematic plan view of a sheet-like laminate provided by an embodiment of the present invention; and
FIG. 7 is a schematic diagram of a longitudinal seam of a packaging container provided by an embodiment of the present invention.

### DETAILED DESCRIPTION

In order to make objectives, technical solutions and advantages of the embodiments of the present invention more apparent, the technical solutions of the embodiments of the present invention will be described in a clearly and fully understandable way in connection with the drawings related to the embodiments of the present invention. Apparently, the described embodiments are just a part but not all of the embodiments of the present invention. Based on the described embodiments herein, those skilled in the art can obtain other embodiment(s), without any inventive work, which should be within the scope of protection of the present invention.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. Also, the terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

When manufacturing a packaging container, firstly, a packaging sheet for packaging is synthesized or fabricated and crease lines are formed on the packaging sheet by creasing, and then a filling process is performed in a packaging machine. In order to prevent from damage to the quality of the contents in the packaging container, the packaging sheet usually includes a barrier layer.

At present, the material that can be used to replace aluminum foil as a material of the barrier layer is polymer material such as PVOH, EVOH, PVDC, PA and PET. However, when the barrier layer is purely made of a polymer material, the sealing performance thereof cannot achieve the level of water and oxygen barrier performance of aluminum-made packaging sheets.

For this end, embodiments of the present invention provide a barrier layer for packaging, a sheet-like laminate and a packaging container thereof, which can not only improve the water and oxygen barrier performance of the existing packaging container, but also facilitate recycling and be environmentally friendly.

At least one embodiment of the present invention provides a barrier layer for packaging, which includes: a base layer mainly including a polyolefin material or a degradable polymer; and an additional layer stacked with the base layer and mainly including polyvinyl alcohol and at least one selected from the group of a metal oxide and a non-metal oxide.

In the barrier layer for packaging provided by at least one embodiment of the present invention, on the one hand, because the polyolefin material or degradable polymer of the base layer has good water barrier performance, contents in the packaging container can be protected against water in a better way; on the other hand, because at least one selected from the group of a metal oxide and a non-metal oxide is additionally provided on the basis of polyvinyl alcohol, the gas barrier performance of polyvinyl alcohol is improved, and gases such as oxygen and water vapor are prevented from infiltrating into the packaging container from the outside to affect the quality of the contents, thereby improving the overall water and oxygen barrier performance of the barrier layer.

Furthermore, in the barrier layer for packaging provided by at least one embodiment of the present invention, polymer materials (polyolefin material, degradable polymer, polyvinyl alcohol), metal oxides and/or non-metal oxides are adopted for the barrier layer, that is, the barrier layer is free of metal materials such as aluminum foil, thus facilitating the recycling of the barrier layer or packaging containers containing the barrier layer, which not only reduces or even eliminates damage to the environment but also lowers the manufacturing cost.

In the embodiment of the present invention, the term "layer A mainly includes substance B" means that substance B accounts for the highest weight percentage (or mass percentage) among all components of layer A. Similarly, "layer A mainly includes substance B and substance C" means that the sum of the weight percentages of substance B and substance C accounts for the highest weight percentage among all the components of layer A.

For example, in the case where layer A includes polymer B1, polymer B2 and polymer B3, assuming that the weight percentage of polymer B1 is 45wt%, the weight percentage of polymer B2 is 30wt% and the weight percentage of polymer B3 is 20wt%, then it can be said that layer A mainly includes polymer B 1 because the weight percentage of polymer B1, i.e., 45wt%, is higher than that of polymers B1 and B2. In this case, since the sum of the weight percentages of polymer B1 and polymer B2 is 75%, it can also be said that "layer A mainly includes polymer B 1 and polymer B2".

In the above, description is given with reference to the cases where the polymer is included, by way of example. It can be understood that in addition to polymers B1 to B3, other different kinds of substances, such as inorganic substances, can also be included in layer A. When other different kinds of substances are included, the weight percentage of these different kinds of substances should not exceed the weight percentage of the main component(s) of the layer. Moreover, in the embodiment of the present invention, the weight percentage of the main component(s) can be lower than 50wt% or higher than 50wt%, as long as it accounts for the highest weight percentage among all components, which is not limited in the embodiment of the present invention.

For the convenience of description, the substance mainly included in a base layer of the barrier layer is referred to as a first polymer, and the substance mainly included in an additional layer of the barrier layer is referred to as a second polymer. In the case where the base layer includes a first portion and a second portion, the first portion mainly includes the first polymer, and the substance mainly included in the second portion is referred to as a third polymer. In the case where the sheet-like laminate includes a barrier layer and an outer covering layer, the substance mainly included in the outer covering layer is referred to as a fourth polymer.

The present invention will be explained through several specific embodiments in the following. In order to keep the following description of the embodiments of the present invention clear and concise, detailed explanations of known functions and known components may be omitted. When any component of an embodiment of the present invention appears in more than one drawing, the component may be represented by the same reference numeral in each drawing.

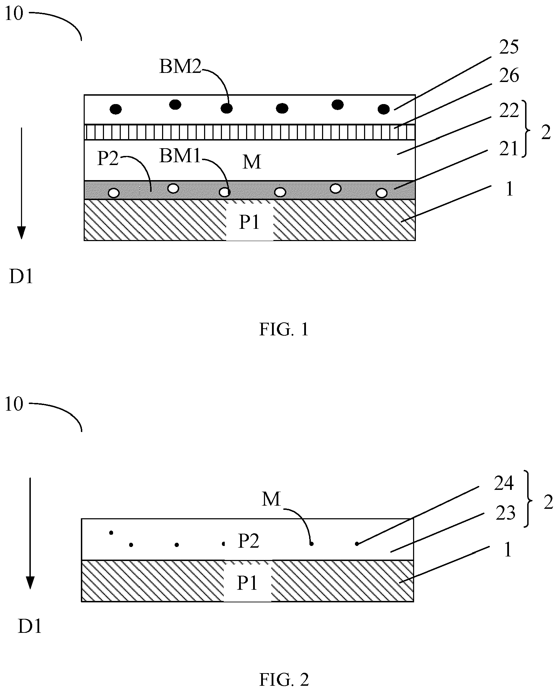

FIG. 1 is a schematic structural diagram of a barrier layer provided by an embodiment of the present invention.

For example, as shown in FIG. 1, the barrier layer 10 includes a base layer 1 and an additional layer 2 stacked with the base layer 1. That is, the base layer 1 and the additional layer 2 overlap with each other in a direction perpendicular to a plane of the base layer 1 (for example, the first direction D1 shown in the figure).

For example, the base layer 1 mainly includes a first polymer P1, which is a polyolefin material, for example. By configuring the first polymer P1 of the base layer 1 as polyolefin material, not only the water barrier performance of the barrier layer is improved, but also the recycling of packaging materials is facilitated because the polyolefin material itself can be recycled, thereby reducing or even eliminating the damage of packaging containers to the environment. Furthermore, because the polyolefin material has high water barrier performance, the water barrier performance of the base layer 1 is higher than that of the additional layer 2.

For example, the polyolefin material includes cycloolefin copolymer (COC), polycyclic olefin copolymer (POC), polyethylene and polypropylene. Preferably, the polyolefin material includes at least one selected from the group of polyethylene and polypropylene, more preferably polyethylene.

For example, the polyethylene includes high density polyethylene (HDPE), middle density polyethylene (MDPE), low density polyethylene (LDPE), linear low density polyethylene (LLDPE), very low density polyethylene (VLDPE) and metallocene Polyethylene (mPE). Preferably, the polyolefin material of the base layer 1 is at least one selected from the group of high density polyethylene (HDPE), middle density polyethylene (MDPE), low density polyethylene (LDPE) and metallocene polyethylene (mPE).

In the existing packaging sheets used for fabricating packaging containers, besides the barrier layer, it is further provided an outer covering layer which usually includes a polymer material. When the base layer of the barrier layer is made of polyethylene terephthalate (PET), it is difficult to separate the PET from the polymer material of the outer covering layer, resulting in a complicated recycling method.

In the barrier layer provided by the embodiment of the present invention, by configuring the first polymer P1 of the base layer 1 as high density polyethylene HDPE, it will be beneficial for the outer covering layer and the base layer to tend to be uniform or homogeneous in materials. In this way, it is not necessary to recycle the packaging materials separately, which is not only beneficial to the recycling of the packaging materials, but also simplifies the garbage recycling treatment method.

For example, the first polymer P1 may also be a degradable polymer, and the degradable polymer includes at least one selected from the group of a biodegradable polymer, a photodegradable polymer and a photo-biodegradable polymer. Biodegradable polymer refers to a polymer that is degraded by microorganisms existing in nature such as bacteria, molds (fungi) and algae. Photodegradable polymer refers to a material whose polymer chains are decomposed in order under the irradiation of ultraviolet rays. Most polymers do not absorb light energy with a wavelength above 285 nm. However, if light-sensitive groups or chemical additives with light-sensitive property are added into the polymers, the process of photooxidation reaction can be accelerated and the polymers can be degraded quickly. Photo-biodegradable polymer can be completely degraded by combining several degradation effects of photodegradation, biodegradation and the like.

For example, the degradable polymer includes at least one selected from the group of Poly-hydroxy-alkanoates (PHA), Polyhydroxybutyrate (PHB), Polybutylene succinate (PBS), Polylactic acid (PLA) and Polycaprolactone (PCL).

In the barrier layer provided by the embodiment of the present invention, the first polymer P1 of the base layer 1 is configured as a degradable polymer, which not only improves the water barrier performance of the barrier layer, but also facilitates the recycling of packaging materials due to the degradable function of the degradable polymer itself, thereby reducing or even eliminating the damage of packaging containers to the environment.

In at least some embodiments, the additional layer 2 of the barrier layer 10 can be a single-layered structure or a multi-layered structure, such as a two-layered structure, which is not limited in the present invention. When the additional layer is configured as a single-layered structure, the number of sub-layers in the barrier layer can be reduced. When the additional layer is configured as a two-layered or multi-layered structure, it is convenient for actual production.

For example, as shown in FIG. 1, the additional layer 2 has a two-layered structure, including a first layer 21 and a second layer 22 stacked with the first layer 21. The first layer 21 is located at a side of the base layer 1 (for example, the upper side shown in the figure), and the second layer 22 is located at a side of the first layer 21 away from the base layer 1. That is, the first layer 21 is located between the base layer 1 and the second layer 22 in the first direction D1.

For example, a material of the second layer 22 is different from that of the first layer 21. One of the first layer 21 and the second layer 22 includes at least one M selected from the group of metal oxide and non-metal oxide ("M" represents the material selected from the group of metal oxide and non-metal oxide), and the other one of the first layer 21 and the second layer 22 includes a second polymer P2. The second polymer P2 is different from the first polymer P1. Because the second polymer P2 has greater oxygen barrier performance, the oxygen barrier performance of the additional layer 21 is greater than that of the base layer 1. Moreover, because the additional layer 21 is additionally provided with at least one M selected from the group of metal oxide and non-metal oxide on the basis of the second polymer P2, the gas barrier performance of the second polymer P2 is improved, and the gas such as oxygen and water vapor can be prevented from infiltrating into the packaging container from outside to affect the quality of the contents, thereby improving the overall water and oxygen barrier performance of the barrier layer 10.

For example, the first layer 21 mainly includes the second polymer P2, and the second layer 22 mainly includes at least one M selected from the group of metal oxide and non-metal oxide. That is, the second layer 22 may mainly include a metal oxide, or a non-metallic oxide, or both the metal oxide and the non-metallic oxide. Through the above arrangement, the second polymer P2 can be used as an adhesive material between the second layer 22 and the base layer 1, thereby enhancing the bonding strength between the base layer 1 and the second layer 22 and further improving the oxygen barrier performance of the barrier layer 10.

For example, the first layer 21 mainly includes at least one M selected from the group of a metal oxide and a non-metal oxide, and the second layer 22 mainly includes the second polymer P2. That is, the first layer 21 may mainly include a metal oxide, or a non-metallic oxide, or both the metal oxide and the non-metallic oxide.

In the embodiment of the present invention, the base layer 1, the first layer 21 and the second layer 22 may be or may not be in contact with each other, which is not limited in the embodiment of the present invention. As shown in FIG. 1, when the first layer 21 is in direct contact with the base layer 1 and the second layer 22 respectively, the bonding strength between the base layer 1 and the second layer 22 can be enhanced, and the oxygen barrier performance of the barrier layer 10 can be further improved.

For example, the second polymer P2 is polyvinyl alcohol (PVA).

For example, the metal oxide is an appropriate metal oxide in the art to achieve a barrier effect on light, vapor and/or gas. Preferably, the metal oxide is a metal oxide of aluminum, iron, copper or titanium, and more preferably aluminum oxide.

For example, the non-metallic oxide is an appropriate non-metallic oxide in the art to achieve a barrier effect on light, vapor and/or gas. For example, the non-metallic oxide is silicon oxide.

In the existing barrier layers, metal oxides such as aluminum oxide (AlOx) are usually formed on the base layer made of a material such as polyethylene terephthalate (PET for short). However, the formation of AlOx on the PET layer is not only costly, but also difficult to control the distribution uniformity and density of AlOx, which easily leads to process instability and poor uniformity of quality of different batches of products.

In the embodiment of the present invention, in the case that the base layer 1 mainly includes HDPE, the first layer 21 mainly includes PVA and the second layer 22 mainly includes AlOx, the barrier layer 10 is formed by firstly applying and solidifying liquid PVA on the base layer, and then electroplating AlOx on the PVA. In this way, not only can the bonding strength between the base layer 1 and the AlOx layer be improved, but also the process controllability is higher and the cost is lower when forming AlOx on the PVA layer, and the distribution uniformity and density of the AlOx on the PVA layer can be better controlled, thus ensuring the high uniformity of quality of the final products.

FIG. 2 is a schematic structural diagram of another barrier layer provided by an embodiment of the present invention.

For example, as shown in FIG. 2, the barrier layer 10 includes a base layer 1 and an additional layer 2 stacked with the base layer 1. That is, the base layer 1 and the additional layer 2 overlap with each other in a direction perpendicular to a plane of the base layer 1 (for example, the first direction D1 shown in the figure).

What is different from the barrier layer in FIG. 1 is that, the additional layer 2 in the barrier layer in FIG. 2 adopts a single-layered structure. For example, the additional layer 2 of the barrier layer 10 includes a matrix material 23 and an additive 24 added into the matrix material 23.

For example, the matrix material 23 is the second polymer P2, and the additive 24 is at least one M selected from the group of a metal oxide and a non-metal oxide. That is, the matrix material 23 made of the second polymer P2 may be added with a metal oxide, or a non-metal oxide, or both the metal oxide and the non-metal oxide. By mixing at least one M selected from the group of metal oxide and non-metal oxide in the matrix material 23 of the additional layer 2, not only the oxygen barrier performance of the additional layer 2 is improved, but also the total thickness of the barrier layer is reduced and the weight of the barrier layer and even the packaging material is lowered as compared with the two-layered structure in FIG. 1.

In at least some embodiments, a size of the metal oxide and/or the non-metal oxide ranges from nanometers to micrometers. For example, when the additive 24 is aluminum oxide AlOx, a particle size of the AlOx may be in the order of nanometers to micrometers. For example, when the additive 24 is silicon oxide, the particle size of the AlOx may be in the order of nanometers to micrometers.

The specific method of adding the additive 24 can be a method known in the art, for example, by mixing powders of the metal oxide into liquid of the second polymer P2, and then solidifying the mixture to form a film, which is not limited in the embodiment of the present invention. For specific materials of the second polymer, the metal oxide and the non-metal oxide, reference can be made to the relevant descriptions in the previous embodiments, and will not be repeated here.

With continued reference to FIG. 1, in at least some embodiments, the barrier layer further includes a light-shielding material. The light-shielding material can provide the barrier layer with certain light-shielding performance while achieving water and oxygen barrier performance, and effectively prevent light from transmitting through the barrier layer. In the specific implementation, the light-shielding material is added into at least one sub-layer of the barrier layer, or applied onto at least one sub-layer of the barrier layer for example in the form of a light-shielding layer, so that the light-shielding material is included in the stacked structure of the barrier layer, and the light-shielding effect is achieved.

In at least some embodiments, in the case where the base layer 1 mainly includes the polyolefin material, the light-shielding material may be added into or applied onto at least one selected from the group of the base layer 1 and the additional layer 2. Further, for example, the light-shielding material may be added into or applied onto at least one selected from the group of the base layer 1, the first layer 21 of the additional layer 2, and the second layer 22 of the additional layer 2.

For example, as shown in FIG. 1, the base layer 1 mainly includes the polyolefin material, and a first light-shielding material BM1 is added into the first layer 21 of the additional layer 2. In the embodiment of the present invention, by adding the first light-shielding material BM1 in the first layer 21 of the additional layer 2, the light-shielding effect of the barrier layer 10 can be improved without changing the current stacked structure of the barrier layer 10.

For example, as shown in FIG. 1, a second light-shielding material BM2 is applied onto the additional layer 2 in the form of a light-shielding layer 25. That is, the barrier layer 10 may further include a light-shielding layer 25, and the light-shielding layer 25 is arranged on the additional layer 2, for example, at a side of the additional layer 2 away from the base layer 1. The light-shielding layer 25 includes a polymer matrix material, and the second light-shielding material BM2 is mixed into the polymer matrix material. By applying the second light-shielding material BM2 onto the additional layer 2 in the form of the light-shielding layer 25, the light-shielding effect of the barrier layer 10 can also be improved.

For example, the second light-shielding material BM2 may be as same as or different from the first light-shielding material BM1. For example, the first light-shielding material BM1 and the second light-shielding material BM2 include color masterbatches, which may include at least one selected from the group of white masterbatch, black masterbatch and gray masterbatch.

For example, the polymer matrix material includes polyethylene, the polyethylene includes at least one selected from the group of HDPE, MDPE, LDPE, LLDPE and VLDPE.

It can be understood that the position of the light-shielding layer 25 shown in FIG. 1 is illustrative, and the light-shielding layer 25 can also be arranged between the first layer 21 and the second layer 22, or arranged at a side of the base layer 1 away from the additional layer 2. Moreover, FIG. 1 only describes the case where the second light-shielding material BM2 is mixed into the polymer matrix material as an example to illustrate a form in which the light-shielding material is applied onto the additional layer 2. However, the embodiment of the present invention is not limited to the above form, for example, the light-shielding material can also be directly coated onto the additional layer 2 in the form of a coating layer to achieve the light-shielding effect as well. The coating layer can be fabricated by physical or chemical methods such as evaporation and spin coating.

For example, in order to improve the bonding strength between the light-shielding layer 25 and the additional layer 2, the barrier layer 10 may further include an adhesive layer 26 arranged between the light-shielding layer 25 and the additional layer 2, that is, the adhesive layer 26 is located between the light-shielding layer 25 and the second layer 22 of the additional layer 2.

For example, the adhesive layer 26 is a polymer suitable for use as an adhesive material in the art, which is suitable for generating a firm bond by functionalization with appropriate functional groups and by forming ionic bonds or covalent bonds with surfaces of corresponding adjacent layers. Preferably, polymers suitable for use as adhesive materials include functionalized polyolefins. Among these functionalized polyolefins, Polyethylene-maleic anhydride graft polymer (EMAH), Ethylene acrylic acid copolymer (EAA) or Ethylene Methacrylic Acid (EMAA) are preferred.

For example, in the case where the base layer 1 mainly includes a degradable polymer, the light-shielding material generally will not be added into the degradable polymer, which is mainly due to the technological difficulty of actual production. It may be relatively easier to apply the light-shielding material directly onto the degradable polymer, as compared with adding the light-shielding material into the degradable polymer.

For example, referring to FIG. 1, in the case where the base layer 1 mainly includes a degradable polymer, a light-shielding material may be added into the additional layer 2 or applied onto at least one selected from the group of the additional layer 2 and the base layer 1. Further, for example, a light-shielding material may be added into at least one selected from the group of the first layer 21 of the additional layer 2 and the second layer 22 of the additional layer 2, or applied onto at least one selected from the group of the first layer 21 of the additional layer 2, the second layer 22 of the additional layer 2 and the base layer 1. For the arrangement of the light-shielding material in the case where the base layer mainly includes a degradable polymer, reference can be made to the previous arrangements of light-shielding material, which will not be repeated here.

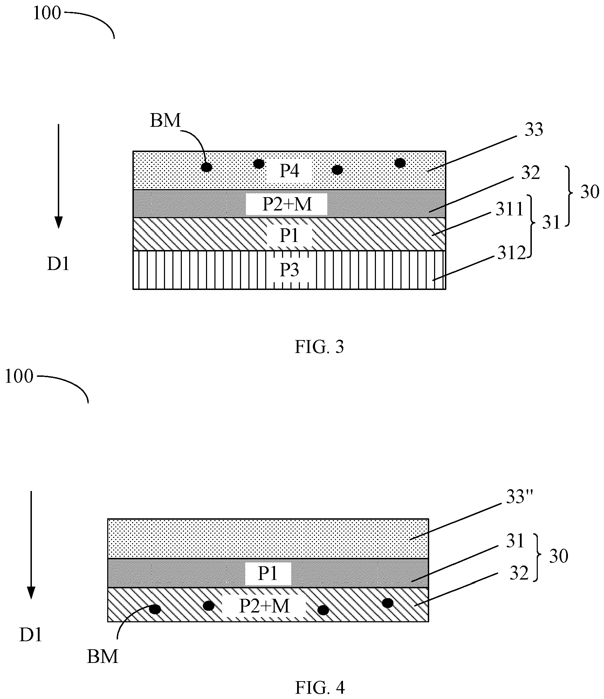

FIG. 3 is a schematic structural diagram of a sheet-like laminate provided by an embodiment of the present invention.

For example, as shown in FIG. 3, the sheet-like laminate 100 for packaging provided by at least one embodiment of the present invention includes a barrier layer 30 and a covering layer 33.

For example, the barrier layer 30 can adopt the barrier layer 10 of any one of the previous embodiments, so as to play the role of water and oxygen barrier in the sheet-like laminate 100. For example, as shown in FIG. 3, the barrier layer 30 includes a base layer 31 and an additional layer 32. The additional layer 32 has, for example, a single-layered structure or a two-layered structure. For the specific structure of the additional layer 32, reference can be made to the description of the previous embodiments.

For example, the base layer 31 includes a first portion 311 close to the additional layer 32 and a second portion 312 away from the additional layer 32. In addition to the first polymer P1, the base layer 31 may further include a third polymer P3. The first portion 311 mainly includes the first polymer P1, and the second portion 312 mainly includes the third polymer P3, and the third polymer P3 is different from the first polymer P1. For example, the mass percentage of the third polymer P3 in the base layer 31 is smaller than the mass percentage of the first polymer P1 in the base layer 31.

For example, the first polymer P1 of the first portion 311 is at least one selected from the group of high density polyethylene (HDPE), middle density polyethylene (MDPE) and low density polyethylene (LDPE). High density polyethylene HDPE has good wear resistance, electrical insulation, toughness and chemical stability. HDPE is insoluble in any organic solvent at room temperature, and is resistant to corrosion of acid, alkali and various salts. Moreover, high density polyethylene HDPE film has low transmission rate to water vapor and air, low water absorption and a crystallinity of 80% ~ 90%, with its hardness, tensile strength and creep property superior to those of low density polyethylene (LDPE). Therefore, it is preferable that the first polymer P1 of the first portion 311 is high density polyethylene (HDPE) or a mixture of low density polyethylene (LDPE) and middle density polyethylene (MDPE). By way of example, the middle density polyethylene (MDPE) accounts for 30%-80% by weight of the mixture, preferably 40%-50%, and more preferably 45%.

For example, the third polymer P3 of the second portion 312 is at least two selected from the group of high density polyethylene (HDPE), middle density polyethylene (MDPE), low density polyethylene (LDPE) and metallocene polyethylene (mPE). Preferably, the third polymer P3 of the second portion 312 is a mixture of low density polyethylene (LDPE) and metallocene polyethylene (mPE). By way of example, the weight percentage of metallocene polyethylene (mPE) in the mixture is 30%-80%, preferably 40%-50%, and more preferably 45%.

For example, the covering layer 33 is stacked with the barrier layer 30. That is, the covering layer 33 and the barrier layer 30 overlap with each other in a direction perpendicular to a plane of the base layer 1 (for example, the first direction D1 shown in the figure). The covering layer 33 is located at a side of the additional layer 32 away from the base layer 31 (for example, the upper side shown in the figure).

In at least some embodiments, the sheet-like laminate 100 can be used as a part of a packaging sheet of a packaging container. For example, as shown in FIG. 3, the first direction D1 can be understood as a direction pointing from an outer surface of the packaging container or packaging sheet to an inner surface of the packaging container or packaging sheet; the inner surface is the surface facing towards the contents of the packaging container. In this case, the covering layer 33 can be used as an outer covering layer of the packaging sheet. When the sheet-like laminate 100 is used as a packaging sheet of a packaging container, the barrier layer 30 is creased or bent together with the covering layer 33 to form a desired shape of the packaging container.

In the embodiment of the present invention, when the covering layer 33 is used as an outer covering layer, the positions of the base layer 31 and the additional layer 32 shown in FIG. 3 can be interchanged. It can be understood that, according to the technical contents disclosed in this embodiment, a person skilled in the art can conceive of the relative positional relationship between the base layer 31 and the additional layer 32 after they are interchanged, and thus it will not be described in this embodiment.

In the embodiment of the present invention, the first portion 311 of the base layer 31 mainly includes the first polymer P1; the additional layer 32 mainly includes the second polymer P2 and at least one M selected from the group of a metal oxide and a non-metal oxide; and the second portion 312 of the base layer 31 mainly includes the third polymer P3. By using this arrangement, on the one hand, because the first polymer P1 has good water barrier performance, the water barrier effect of the sheet-like laminate 100 is improved; on another hand, because at least one M selected from the group of a metal oxide and a non-metal oxide is added on the basis of the second polymer P2, the gas barrier performance of the second polymer P2 is improved; on yet another hand, the third polymer P3 also has good water and oxygen barrier performance, thereby further improving the overall water and oxygen barrier performance of the sheet-like laminate 100.

For example, an adhesive layer (not shown in the figure) is further provided between the first portion 311 and the second portion 312, and the adhesive layer between the first portion 311 and the second portion 312 is for example a polymer suitable for use as an adhesive material in the art, the polymer is suitable for generating a firm bond by functionalization with appropriate functional groups and by forming ionic bonds or covalent bonds with surfaces of corresponding adjacent layers. Preferably, polymers suitable for use as adhesive materials include functionalized polyolefins. Among these functionalized polyolefins, poly(ethylene-alt-maleic anhydride) (EMAH), Ethylene acrylic acid copolymer (EAA) or Copolymers of ethylene with methyl methacrylate (EMAA) are preferred.

For example, the covering layer 33 mainly includes a fourth polymer P4, and both the fourth polymer P4 and the third polymer P3 are different from the second polymer P2. By configuring the first portion 311 to mainly include the first polymer P1, configuring the second portion 312 to mainly include the third polymer P3, configuring the additional layer 32 to mainly include the second polymer P2 and at least one selected from the group of a metal oxide and a non-metal oxide, and configuring the covering layer 33 to mainly include the fourth polymer P4, the sheet-like laminate 100 is free of metal materials such as aluminum foil, which is beneficial to the recycling of the sheet-like laminate 100 or packaging containers made of the sheet-like laminate 100. In this way, it not only reduces or even eliminates damage to the environment but also lowers the manufacturing cost.

In at least some embodiments, the first polymer P1, the fourth polymer P4 and the third polymer P3 may be the same kind of polymers. For example, the first polymer P1, the fourth polymer P4 and the third polymer P3 are all polyolefin materials. The polyolefin material is at least one selected from the group of polyethylene and polypropylene, preferably polyethylene. Because the first polymer P1, the fourth polymer P4 and the third polymer P3 are all polyolefin materials, the outer covering layer, the inner covering layer and the base layer 31 tend to be uniform or homogeneous in materials, so that the packaging materials do not need to be recycled separately, which is not only beneficial to the recycling of packaging materials, but also simplifies the garbage recycling treatment method.

In at least some embodiments, the first polymer P1, the fourth polymer P4 and the third polymer P3 may be different polyethylene materials. For example, the first polymer P1 is at least one selected from the group of HDPE, MDPE and LDPE, preferably HDPE, or preferably a mixture of MDPE and LDPE. The fourth polymer P4 is, for example, at least one selected from the group of HDPE, MDPE, LDPE, LLDPE and VLDPE, preferably LDPE. The third polymer P3 is, for example, at least two selected from the group of HDPE, MDPE, LDPE and mPE, preferably a mixture of mPE and LDPE. The second polymer P2 is polyvinyl alcohol (PVA).

In at least some embodiments, the first polymer P1, the fourth polymer P4 and the third polymer P3 are degradable polymers. Because the first polymer P1, the fourth polymer P4 and the third polymer P3 are all degradable polymers, the covering layer 33 and the base layer 31 tend to be uniform or homogeneous in materials, so that the packaging materials do not need to be recycled separately, which is not only beneficial to the recycling of packaging materials, but also simplifies the garbage recycling treatment method.

For example, the degradable polymer includes at least one selected from the group of biodegradable polymer, photodegradable polymer and photo-biodegradable polymer. The degradable polymer includes at least one selected from the group of PHA, PHB, PBS, PLA and PCL. The first polymer P1, the fourth polymer P4 and the third polymer P3 may be the same degradable polymer or different degradable polymers. When the first polymer P1, the fourth polymer P4 and the third polymer P3 are the same degradable polymer, the manufacturing process can be simplified. In another example, the first polymer P1 is PHA, the fourth polymer P4 is PHA, and the third polymer P3 is PBS. The second polymer P2 is an alcoholic organic compound, preferably polyvinyl alcohol (PVA).

In at least some embodiments, the first polymer P1, the fourth polymer P4 and the third polymer P3 may be different kinds of polymers. For example, the first polymer P1 is a degradable polymer, and the fourth polymer P4 and the third polymer P3 are polyolefin materials. The polyolefin material is at least one selected from the group of polyethylene and polypropylene, preferably polyethylene. The second polymer P2 is polyvinyl alcohol (PVA). Because the first polymer P1 is a degradable material, it is beneficial to the recycling of packaging materials. In an example, the first polymer P1 is PHA, the third polymer P3 is a mixture of mPE and LDPE, and the fourth polymer P4 is LDPE.

In at least some embodiments, the sheet-like laminate 100 may further include a light-shielding material BM for blocking light from transmitting through the sheet-like laminate 100.

For example, when both the covering layer 33 and the base layer 31 mainly include polyolefin materials, the light-shielding material BM is added into at least one selected from the group of the base layer 31, the additional layer 32 and the covering layer 33, or applied onto at least one selected from the group of the base layer 31, the additional layer 32 and the covering layer 33 for example in the form of a light-shielding layer. For example, as shown in FIG. 3, a light-shielding material BM is added into the covering layer 33, thereby playing a role of preventing light from transmitting through the stacked materials.

For example, the light-shielding material BM may also be applied onto one or more sub-layers of the sheet-like laminate 100. For example, similar to the light-shielding layer 25 shown in FIG. 1, the sheet-like laminate 100 in FIG. 3 may further include a light-shielding layer, which may be arranged on at least one selected from the group of the base layer 31, the additional layer 32 and the covering layer 33.

For example, when both the covering layer 33 and the base layer 31 mainly include degradable polymers, the light-shielding material BM is generally not added into the degradable polymer in order to reduce the difficulty of the manufacturing process. In this case, the light-shielding material BM is added into the additional layer 32, or applied onto at least one selected from the group of the base layer 31 and the additional layer 32 for example in the form of a light-shielding layer.

For the material, specific adding method and specific form of the light-shielding material BM in the sheet-like laminate 100 of FIG. 3, reference can be made to the description in the previous embodiments, and will not be repeated here.

FIG. 4 is a schematic structural diagram of another sheet-like laminate provided by an embodiment of the present invention.

In at least some embodiments, the covering layer can also be used as a carrier layer of the sheet-like laminate, for example, a paper layer. For example, as shown in FIG. 4, the sheet-like laminate 100 includes a barrier layer 30 and a covering layer 33".

For example, the barrier layer 30 can adopt the barrier layer 10 of any one of the previous embodiments, so as to play the role of water and oxygen barrier in the sheet-like laminate 100. For example, as shown in FIG. 4, the barrier layer 30 includes a base layer 31 and an additional layer 32. The additional layer 32 has a single-layered structure or a two-layered structure, for example. For the specific structure of the additional layer 32, reference can be made to the description of the previous embodiments.

For example, the covering layer 33" is stacked with the barrier layer 30, and is used as a carrier layer in the sheet-like laminate 100 to have a supporting effect. For example, the carrier layer is a paper layer, and the paper layer is at least one selected from the group of paper board or paper sheet.

For example, the base layer 31 mainly includes a first polymer P1, which is a degradable polymer. Because the first polymer P1 is a degradable material, it is beneficial to the recycling of packaging materials. If the additional layer is in direct contact with the paper layer, the bonding strength between the additional layer and the paper layer is relatively low. However, when the base layer 31 is arranged between the additional layer 31 and the covering layer 33", the bonding strength between the additional layer 31 and the covering layer 33" can be enhanced, thereby improving the overall water and oxygen barrier performance of the sheet-like laminate.

For example, the sheet-like laminate 100 further includes a light-shielding material BM. In order to reduce the difficulty of the manufacturing process, the light-shielding material BM is not added into the degradable polymer. In this case, the light-shielding material BM is added into at least one selected from the group of the additional layer 32 and the covering layer 33", or applied onto at least one selected from the group of the base layer 31, the additional layer 32 and the covering layer 33" for example in the form of a light-shielding layer. For example, as shown in FIG. 4, a light-shielding material BM is added into the additional layer 32, thereby blocking light from transmitting through the sheet-like laminate 100. Thus, the light blocking performance of the sheet-like laminate 100 is further improved.

For the material, specific adding method and specific form of the light-shielding material BM in the sheet-like laminate 100 of FIG. 4, reference can be made to the description in the previous embodiments, and will not be repeated here.

Referring to FIG. 3, at least one embodiment of the present invention further provides a sheet-like laminate 100 for packaging, including a barrier layer 30 and a covering layer 33. The barrier layer 30 includes a base layer 31 and an additional layer 32. The base layer 31 includes a first portion 311 close to the additional layer 32 and a second portion 312 away from the additional layer 32. The first portion 311 mainly includes a first polymer P1, and the second portion 312 mainly includes a third polymer P3. The additional layer 32 is stacked with the base layer 31 and mainly includes a second polymer P2 and at least one M selected from the group of a metal oxide and a non-metal oxide, and the second polymer P2 is different from the first polymer P1 and the third polymer P3. The covering layer 33 is stacked with the barrier layer 30 and mainly includes a fourth polymer P4, which is different from the second polymer P2. The covering layer 33 is located at a side of the additional layer 32 away from the base layer 31. The first polymer P1, the third polymer P3 and the fourth polymer P4 are all polyolefin materials; alternatively, the first polymer P1, the third polymer P3 and the fourth polymer P4 are all degradable polymers.

In the sheet-like laminate 100 provided by the embodiment of the present invention, because the first polymer P1, the third polymer P3 and the fourth polymer P4 are all polyethylene materials or degradable polymers, the covering layer 33 and the base layer 31 tend to be uniform or homogeneous in materials, so that the packaging materials do not need to be recycled separately, which not only facilitates the recycling of the packaging materials, but also simplifies the garbage recycling treatment method.

The sheet-like laminate 100 provided by the embodiment of the present invention is free of metal materials such as aluminum foil, which is beneficial to the recycling of the sheet-like laminate 100 or packaging sheets made of the sheet-like laminate 100, which not only reduces or even eliminates the damage to the environment, but also lowers the manufacturing cost.

In the sheet-like laminate shown in Figs. 3 and 4, the covering layer 33 is in direct contact with the barrier layer 30, and the covering layer 33" is in direct contact with the barrier layer 30. However, it can be understood that in order to further enhance the bonding strength between the covering layer and the barrier layer, in at least some embodiments, the sheet-like laminate 100 may further include an adhesive layer (not shown) located between the covering layer 33 (or the covering layer 33") and the barrier layer 30. For the specific material of the adhesive layer, reference can be made to the relevant descriptions in the previous embodiments, and will not be repeated here.

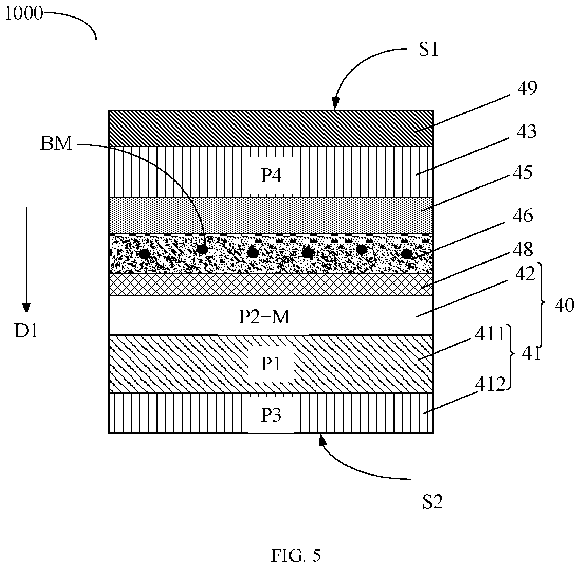

FIG. 5 is a schematic structural diagram of still another sheet-like laminate provided by an embodiment of the present invention.

For example, as shown in FIG. 5, a sheet-like laminate 1000 for packaging provided by at least one embodiment of the present invention includes a printed layer 49, an outer covering layer 43, a carrier layer 45, a light-shielding layer 46, an adhesive layer 48 and a barrier layer 40 which are sequentially stacked along a first direction D1 from an outer surface S2 of the sheet-like laminate 1000 to an inner surface S2 of the sheet-like laminate 1000.

It can be understood that the order of the sub-layers in the laminate 1000 shown in FIG. 5 can be schematic, and the person skilled in the art can adjust the order as required. For example, in the sheet-like laminate 1000 for packaging, the outer covering layer 43, the printed layer 49, the carrier layer 45, the light-shielding layer 46, the adhesive layer 48, and the barrier layer 40 are sequentially stacked along the first direction D1 from the outer surface S2 of the sheet-like laminate 1000 to the inner surface S2 of the sheet-like laminate 1000.

For example, the barrier layer 40 can adopt the barrier layer of any one of the previous embodiments, so as to play the role of water and oxygen barrier in the sheet-like laminate 1000.

For example, as shown in FIG. 5, the barrier layer 40 includes a base layer 41 and an additional layer 42. The base layer 41 includes a first portion 411 and a second portion 412. The additional layer 42 is, for example, a single-layered structure or a two-layered structure. For the specific structures of the base layer 41 and the additional layer 42, reference can be made to the description of the previous embodiments.

In at least some embodiments, the sheet-like laminate 1000 is a packaging sheet for forming a packaging container, so that the second portion 412 of the base layer 41 faces towards the contents in the packaging container. When the sheet-like laminate 1000 is used as a packaging sheet of a packaging container, the printed layer 49, the outer covering layer 43, the light-shielding layer 46, the carrier layer 45, the adhesive layer 48 and the barrier layer 40 are creased or bent together to form a desired shape of the packaging container.

In the embodiment of the present invention, the first portion 411 of the base layer 41 mainly includes a first polymer P1, the additional layer 42 mainly includes a second polymer P2 and at least one M selected from the group of a metal oxide and a non-metal oxide, and the second portion 412 of the base layer 41 mainly includes a third polymer P3. By using this arrangement, on the one hand, because the first polymer P1 has good water barrier performance, the water barrier effect of the sheet-like laminate 100 is improved; on another hand, because at least one M selected from the group of a metal oxide and a non-metal oxide is added on the basis of the second polymer P2, the gas barrier performance of the second polymer P2 is improved; on yet another hand, the third polymer P3 also has good water and oxygen barrier performance, thereby further improving the overall water and oxygen barrier performance of the sheet-like laminate 100.

For example, the outer covering layer 43 mainly includes a fourth polymer P4, and both the fourth polymer P4 and the third polymer P3 are different from the second polymer P2. By configuring the first portion 411 to mainly include the first polymer P1, configuring the second portion 412 to mainly include the third polymer P3, configuring the additional layer 42 to mainly include the second polymer P2 and at least one selected from the group of a metal oxide and a non-metal oxide, and configuring the outer covering layer 43 to mainly include the fourth polymer P4, the sheet-like laminate 1000 is free of metal materials such as aluminum foil, thus facilitating the recycling of the sheet-like laminate 1000 or packaging containers made of the sheet-like laminate 1000, which not only reduces or even eliminates the damage to the environment, but also lowers the manufacturing cost.

In at least some embodiments, the first polymer P1, the fourth polymer P4 and the third polymer P3 may be the same kind of polymers. For example, the first polymer P1, the fourth polymer P4 and the third polymer P3 are all polyolefin materials. The polyolefin material is at least one selected from the group of polyethylene and polypropylene, preferably polyethylene. Because the first polymer P1, the fourth polymer P4 and the third polymer P3 are all polyolefin materials, the outer covering layer 43, the inner covering layer and the base layer 41 tend to be uniform or homogeneous in materials, so that the packaging materials do not need to be recycled separately, which is not only beneficial to the recycling of packaging materials, but also simplifies the garbage recycling treatment method.

In at least some embodiments, the first polymer P1, the fourth polymer P4 and the third polymer P3 may be different polyethylene materials. For example, the first polymer P1 is at least one selected from the group of HDPE, MDPE and LDPE, preferably HDPE, or preferably a mixture of MDPE and LDPE. The fourth polymer P4 is, for example, at least one selected from the group of HDPE, MDPE, LDPE, LLDPE and VLDPE, preferably LDPE. The third polymer P3 is, for example, at least two selected from the group of HDPE, MDPE, LDPE and mPE, and is preferably a mixture of mPE and LDPE. The second polymer P2 is polyvinyl alcohol (PVA).

In at least some embodiments, the first polymer P1, the fourth polymer P4 and the third polymer P3 are degradable polymers. Because the first polymer P1, the fourth polymer P4 and the third polymer P3 are all degradable polymers, the outer covering layer 43 and the base layer 41 tend to be uniform or homogeneous in materials, so that the packaging materials do not need to be recycled separately, which not only facilitates the recycling of the packaging materials, but also simplifies the garbage recycling treatment method.

For example, the degradable polymer includes at least one selected from the group of biodegradable polymer, photodegradable polymer and photo-biodegradable polymer. The degradable polymer includes at least one selected from the group of PHA, PHB, PBS, PLA and PCL. The first polymer P1, the fourth polymer P4 and the third polymer P3 may be the same degradable polymer or different degradable polymers. When the first polymer P1, the fourth polymer P4 and the third polymer P3 are the same degradable polymer, the manufacturing process can be simplified. In another example, the first polymer P1 is PHA, the fourth polymer P4 is PHA, and the third polymer P3 is PBS. The second polymer P2 is an alcoholic organic compound, preferably polyvinyl alcohol (PVA).

In at least some embodiments, the first polymer P1, the fourth polymer P4 and the third polymer P3 may be different kinds of polymers. For example, the first polymer P1 is a degradable polymer, and the fourth polymer P4 and the third polymer P3 are polyolefin materials. The polyolefin material is at least one selected from the group of polyethylene and polypropylene, preferably polyethylene. The second polymer P2 is polyvinyl alcohol (PVA). Because the first polymer P1 a degradable material, it is beneficial to the recycling of packaging materials. Illustratively, the first polymer P1 is PHA, the third polymer P3 is a mixture of mPE and LDPE, and the fourth polymer P4 is LDPE.

For example, as shown in FIG. 5, the sheet-like laminate 1000 further includes a carrier layer 45 located between the outer covering layer 43 and the barrier layer 40 along the first direction D 1. For example, in the case where the sheet-like laminate 1000 includes a light-shielding layer 46, the carrier layer 45 is located between the light-shielding layer 46 and the outer covering layer 49.

For example, the carrier layer 45 has a supporting effect in the sheet-like laminate 1000. For example, the carrier layer 45 is a paper layer, and the paper layer is at least one selected from the group of paper board and paper sheet. As an example, the carrier layer 45 includes fibrillated cellulose, or the carrier layer 45 includes polyvinyl alcohol, or the carrier layer 45 includes polyvinyl alcohol added with a metal oxide. For example, a surface of the carrier layer 45 (e.g., paper) is coated with polyvinyl alcohol or polyvinyl alcohol added with a metal oxide.

For example, as shown in FIG. 5, the sheet-like laminate 1000 further includes a printed layer 49, and the printed layer 49 is located at a side of the outer covering layer 43 away from the carrier layer 45 along the first direction D1. As an example, the printed layer includes ink, and the ink includes an inorganic solvent or an organic solvent, and the inorganic solvent is, for example, water.

It can be understood that the position of the printed layer 49 shown in FIG. 5 is for illustrative purpose, and the printed layer 49 can also be located at other positions, such as between the carrier layer 45 and the outer covering layer 43 along the first direction D1.

For example, as shown in FIG. 5, the sheet-like laminate 1000 further includes a light-shielding material BM for preventing light from transmitting through the sheet-like laminate 1000.

For example, in the case that the outer covering layer 43, as well as the first portion 411 and the second portion 412 of the base layer 41 all mainly include polyolefin materials, the light-shielding material BM is added into at least one selected from the group of the first portion 411, the additional layer 42, the second portion 412, the outer covering layer 43 and the carrier layer 45, or the light-shielding material BM is applied onto at least one selected from the group of the first portion 411, the additional layer 42, the second portion 412, the outer covering layer 45 and the carrier layer 45 for example in the form of a light-shielding layer.

For example, as shown in FIG. 4, the sheet-like laminate 1000 further includes a light-shielding layer 46 arranged on the carrier layer 45, that is, between the carrier layer 45 and the outer covering layer 43, so as to prevent light from transmitting through the sheet-like laminate 1000 along the first direction D1, thereby improving the light-shielding performance of the sheet-like laminate 1000. The light-shielding layer 46 includes for example a polymer matrix material (not labeled), and the light-shielding material BM is mixed into the polymer matrix material.

For example, in the case where the outer covering layer 43, as well as the first portion 411 and the second portion 412 of the base layer 41 all mainly include degradable polymers, the light-shielding material BM is generally not added into the degradable polymer in order to reduce the difficulty of the manufacturing process. In this case, the light-shielding material BM is added into at least one selected from the group of the additional layer 42 and the carrier layer 45, or applied onto at least one selected from the group of the first portion 411, the additional layer 42, the outer covering layer 44, the second portion 412 and the carrier layer 45 for example in the form of a light-shielding layer. For the arrangement of the light-shielding material in the case where the outer covering layer 43, the first portion 411 and the second portion 412 all mainly include degradable polymers, reference can be made to the arrangement of the light-shielding material in the previous embodiments, and the details will not be repeated here.

For the material, specific adding method and specific form of the light-shielding material BM in the sheet-like laminate 1000 of FIG. 5, reference can be made to the description in the previous embodiments, and will not be repeated here.

For example, in FIG. 5, the outer covering layer 43, the carrier layer 45, and the barrier layer 40 are sequentially stacked together along the first direction D1 and are in contact with each other. In order to enhance the bonding strength among them, in at least some embodiments, the sheet-like laminate 1000 further includes at least one adhesive layer. For example, as shown in FIG. 5, the sheet-like laminate 1000 further includes an adhesive layer 48, which is arranged between the light-shielding layer 46 and the barrier layer 40. For another example, an adhesive layer may also be provided between the first portion 411 and the second portion 412 of the barrier layer. For the specific material of the adhesive layer, reference can be made to the description in the previous embodiments, and will not be repeated here.

In at least some embodiments, an oxygen transmission rate of the barrier layer 40 at 23°C and 50% relative humidity is 0.01 cm³/24 hours to 0.5 cm³/24 hours, preferably 0.1 cm³/24 hours to 0.3 cm³/24 hours, and more preferably 0.11 cm³/24 hours to 0.14 cm³/24 hours.

In at least some embodiments, a Vicat softening temperature of the base layer 41 is 60°C to 150°C; preferably 95°C to 140°C, more preferably 100°C to 135°C. The test method of Vicat softening temperature is disclosed in China patent application CN103747956A, which is incorporated here in its entirety by reference.

In at least some embodiments, a melt flow index of the base layer 41 is from 1 g/10 min to 25 g/10 min, preferably 2 g/10 min to 20 g/10 min, and more preferably 2.5 g/10 min to 15 g/10 min.

In at least some embodiments, a melting temperature of the base layer 41 is from 90°C to 140°C; preferably from 95°C to 115°C.

In at least some embodiments, a density of the outer covering layer 43 is 0.89-0.98 g/m³; preferably 0.900-0.970 g/cm³, preferably 0.910-0.935 g/cm³, more preferably 0.912-0.932 g/cm³, and even more preferably 0.915-0.930 g/cm³.

In at least some embodiments, a Vicat softening temperature of the outer covering layer 43 is higher than that of the base layer 41, and the Vicat softening temperature of the outer covering layer 43 is 90°C to 150°C, preferably 95°C to 140°C, more preferably 100°C to 135°C.

In at least some embodiments, a melt flow index of the outer covering layer 43 is 1-25 g/10min, preferably 2-20 g/10min, and more preferably 2.5-15 g/10min.

In at least some embodiments, a melting temperature of the outer covering layer 43 is 80°C to 15°C, preferably 90°C to 145°C, more preferably 95°C to 135°C.

In at least some embodiments, a total gram weight of the base layer 41 is 10% to 40% of a total gram weight of the sheet-like laminate 1000. For example, the total gram weight of the base layer 41 is 35 g/m² to 60 g/m². The total gram weight of the sheet-like laminate 1000 is 100 g/m² to 350 g/m².

In at least some embodiments, a total gram weight of the outer covering layer 43 and the base layer 41 is 12.9%-53.3% of a total gram weight of the sheet-like laminate 1000. For example, the total gram weight of the outer covering layer 43 and the base layer 41 is 45 g/m² to 80 g/m². The total gram weight of the sheet-like laminate 1000 is 100 g/m² to 350 g/m².

In at least some embodiments, a longitudinal stiffness of the sheet-like laminate is 8 mN*m to10 mN*m.

### Testing of Sheet-like laminate

Referring to the test method in "PAPER-BASED COMPOSITE MATERIAL FOR ASEPTIC PACKAGING OF LIQUID FOOD (i.e., China National Standards GB 18192-2008)", parameters such as a peeling strength of plastic of base layer, an oxygen transmission rate, a stiffness, a quantification of plastic film of base layer and a total gram weight, of the sheet-like laminate provided by at least one embodiment of the present invention were tested respectively. Taking the sheet-like laminate 1000 with a structure of printed layer /LDPE/paper layer/light-shielding layer/adhesive layer/ALOx/PVA/HDPE/mPE+LDPE as an example, the test results are shown in Table 1.

**Table 1**

| Parameter | Unit | |
|---|---|---|
| Peeling Strength of Plastic in the Base layer | N/15mm | ≥2 |
| Oxygen Transmission rate (23°C, 50%RH) | cm³/24 hours | 0.11-0.14 |
| Stiffness | mN·m | 8-10 |
| Quantification of Plastic Film of The Base layer | g/m² | ≥22 |
| Total Gram Weight of the Sheet-like material | g/m² | 276 |
| Total Gram Weight of the Base layer | g/m² | 40.5 |
| Total Gram Weight of the Base layer and the Outer Covering Layer | g/m² | 54.5 |

Comparative example: PET is used as the material of the base layer of the sheet-like laminate, and the specific structure of the sheet-like laminate is PE/paper layer/adhesive layer /ALOx/coating/PET/coating/ adhesive layer/mPE+LDPE.

Referring to the test method in "PAPER-BASED COMPOSITE MATERIAL FOR ASEPTIC PACKAGING OF LIQUID FOOD (i.e., China National Standards GB 18192-2008)", the oxygen transmission rate of the comparative example was tested and obtained as 0.2-0.3.

Compared with the comparative example, the sheet-like laminate provided by at least one embodiment of the present invention not only improves the oxygen barrier performance, but also enables the sheet-like laminate to be more conducive to recycling due to the use of polymer materials which tend to be homogeneous.

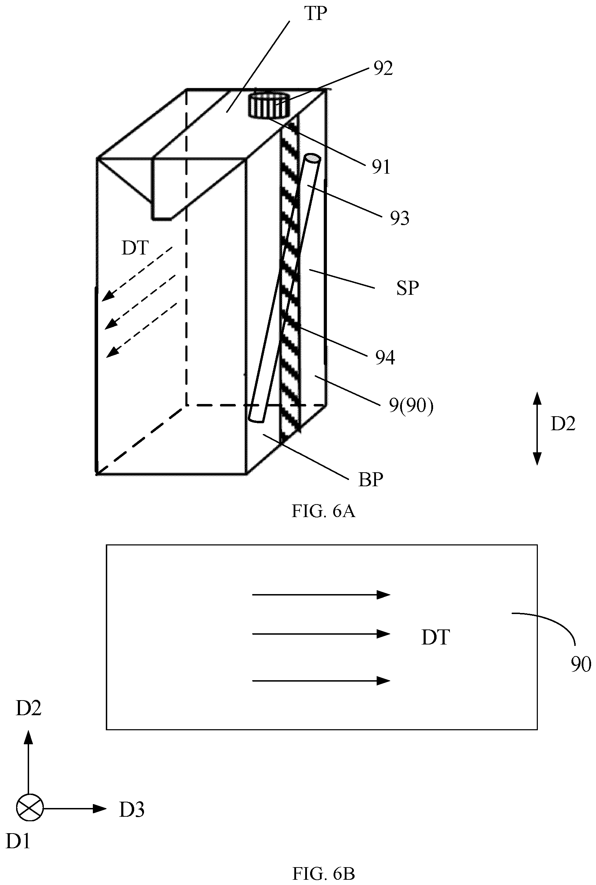

FIG. 6A is a schematic structural diagram of a packaging container provided by an embodiment of the present invention. FIG. 6B is a schematic plan view of a sheet-like laminate provided by an embodiment of the present invention.

For example, as shown in FIG. 6A, a packaging container 9 provided by at least one embodiment of the present invention is formed by folding a sheet-like laminate 90. For example, the sheet-like laminate 90 is the sheet-like laminate of any one of the previous embodiments, such as the sheet-like laminate 1000.

For example, the packaging container 9 includes a bottom portion BP, a top portion TP, and a sidewall SP provided between the bottom portion BP and the top portion TP. The sidewall SP includes a seam 94 which is formed by sealing the sheet-like laminate 90 itself, and the seam 94 extends in a second direction D2 from the bottom portion BP to the top portion TP; the second direction D2 is perpendicular to the first direction D1.

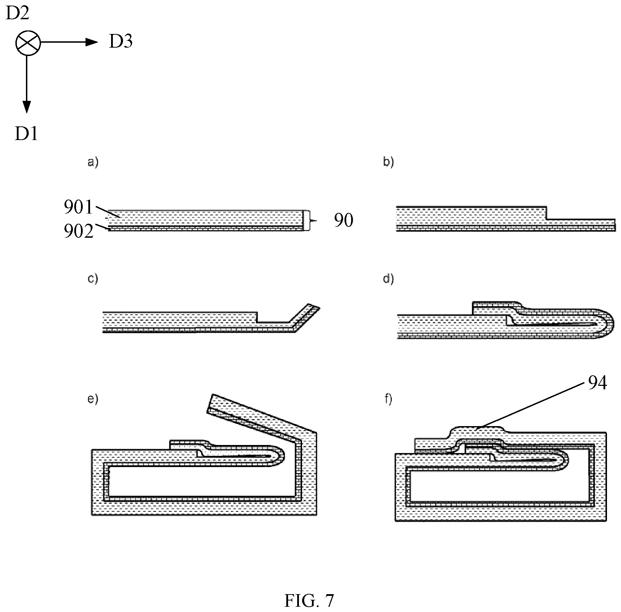

FIG. 7 is a schematic diagram of a seam of a packaging container provided by an embodiment of the present invention. In FIG. 7, a) to f) are schematic diagrams showing the events in chronological order of occurrence.

For example, the packaging container 9 is obtained by creasing a sheet-like laminate 90. For the sake of simplicity, it only illustrates that the sheet-like laminate 90 includes a carrier layer 901 and a barrier layer 902, and the carrier layer 901 and the barrier layer 902 can adopt the carrier layer and the barrier layer described in any one of the previous embodiments. In b), the carrier layer 901 is processed to remove a part thereof. In c) to e), the sheet-like laminate 90 is creased. In f), a longitudinal seam 94 of the packaging container 9 shown in FIG. 6A is obtained by sealing the sheet-like laminate 90 itself.

For example, as shown in FIGs. 6A, 6B, and 7, the carrier layer 901 includes fibrillated cellulose, and an extension direction DT of the fibrillated cellulose is parallel to a plane of the sheet-like laminate 90 and perpendicular to the second direction D2. When the sheet-like laminate 90 is creased as shown in FIG. 7, the extension direction DT of the fibrillated cellulose is different from the extension direction of the longitudinal seam 94, for example, an included angle between them is less than or equal to 90 degrees, preferably 90 degrees.

For example, as shown in FIG. 6A, the packaging container 9 includes an opening 91 provided in the sheet-like laminate 90 and a sealing member 92 configured to seal the opening 91. The opening 91 is for example a liquid outlet, and the sealing member 92 is for example a lid. For example, the opening 91 is located at the top portion TP of the packaging container 9, and the cap is rotatably connected at the liquid outlet.

For example, a material of the sealing member 92 is as same as that of the outer covering layer (for example, the outer covering layer 43 of the sheet-like laminate 1000), and both the material of the sealing member 92 and the material of the outer covering layer mainly include polyolefin materials or degradable polymers. By configuring the sealing member 92 and the outer covering layer to mainly include polyolefin materials or degradable polymers, the packaging container 9 is free of metal materials such as aluminum foil, thus facilitating the recycling of the packaging container 9, which not only reduces or even eliminates the damage to the environment, but also lowers the manufacturing cost.

Moreover, when the base layer (for example, the base layer 41 of the sheet-like laminate 1000), the outer covering layer (for example, the outer covering layer 43 of the sheet-like laminate 1000) and the sealing member 92 of the packaging container 9 all mainly include polyolefin materials or degradable polymers, the packaging container 9 tends to be uniform or homogeneous in materials, so that the packaging sheet and the sealing member 92 of the packaging container 9 do not need to be recycled separately, which not only facilitates the recycling of the packaging container, but also simplifies the garbage recycling treatment method.

For example, as shown in FIG. 6A, the packaging container 9 further includes a straw 93 connected to the packaging container 9 and a wrapping (not shown) wrapping the straw 93, and the straw 93 is connected to the sidewall SP by the wrapping.

For example, a material of the wrapping is as same as that of the outer covering layer, and both the material of the wrapping and the material of the outer covering layer mainly include polyolefin materials or degradable polymers. By configuring the wrapping and the outer covering layer to mainly include polyolefin materials or degradable polymers, the packaging container 9 is free of metal materials such as aluminum foil, which is beneficial to the recycling of the packaging container 9, which not only reduces or even eliminates the damage to the environment, but also lowers the manufacturing cost.

### Testing of Packaging Containers:

According to the inventor's research, forming coefficient is one of parameters which entirely characterize the packaging container or the sheet-like laminate of the present invention. For example, a packaging container can be obtained by a combination of various operation steps, and any of such combination results in a specific forming coefficient . The method for obtaining the forming coefficient of packaging containers is disclosed in China patent application CN107434065A, which is incorporated here in its entirety by reference.

Referring to the test method in "PAPER-BASED COMPOSITE MATERIAL FOR ASEPTIC PACKAGING OF LIQUID FOOD (i.e., China National standards GB 18192-2008)", a sealing strength of the top portion and a sealing strength of the bottom portion of the packaging container provided by at least one embodiment of the present invention were tested respectively.

After testing, the sealing strength of the top portion is less than that of the bottom portion, and the sealing strength of the top portion is 11N-26N. The forming coefficient of the packaging container is in the range of 1.0 m²/kg to 10.0 m²/kg, preferably 1.5 m²/kg to 9.0 m²/kg.

The barrier layer for packaging, the sheet-like laminate and the packaging container thereof provided by the embodiments of the present invention can not only improve the water and oxygen barrier performance of the existing packaging container, but also be beneficial to recycling and be environmentally friendly.

Further, the present invention may also be configured as the following embodiments.
(1). A barrier layer for packaging, comprising:
   a base layer, mainly comprising a polyolefin material or a degradable polymer; and
   an additional layer, stacked with the base layer and mainly comprising polyvinyl alcohol and at least one selected from the group of a metal oxide and a non-metal oxide.
(2). The barrier layer according to (1), wherein the additional layer comprises:
   a first layer located on the base layer; and
   a second layer located at a side of the first layer away from the base layer, wherein a material of the second layer is different from a material of the first layer;
   wherein the first layer comprises the polyvinyl alcohol, and the second layer comprises at least one selected from the group of the metal oxide and the non-metal oxide.
(3). The barrier layer according to (1) or (2), wherein the polyvinyl alcohol is used as a matrix material of the additional layer, and at least one selected from the group of the metal oxide and the non-metal oxide is added into the matrix material.
(4). The barrier layer according to any one of (1)- (3), further comprising a light-shielding material, wherein:
   in a case that the base layer mainly comprises the polyolefin material, the light-shielding material is added into or applied onto at least one selected from the group of the base layer and the additional layer; or
   in a case that the base layer mainly comprises the degradable polymer, the light-shielding material is added into the additional layer or applied onto at least one selected from the group of the base layer and the additional layer.
(5). The barrier layer according to any one of (1)- (4), wherein:
   the polyolefin material comprises at least one selected from the group of high density polyethylene (HDPE), middle density polyethylene (MDPE), low density polyethylene (LDPE) and metallocene polyethylene (mPE);
   the degradable polymer comprises at least one selected from the group of a biodegradable polymer, a photodegradable polymer and a photo-biodegradable polymer;
   the metal oxide is aluminum oxide, and the non-metal oxide is silicon oxide.
(6). The barrier layer according to (5), wherein an oxygen transmission rate of the barrier layer is from 0.01 cm3/24 hours to 0.5 cm3/24 hours at 23°C and 50% relative humidity.
(7). The barrier layer according to (5), wherein:
   a Vicat softening temperature of the base layer is from 60°C to 150°C;
   a melt flow index of the base layer is from 1 g/10min to 25 g/10min; and
   a melting temperature of the base layer is from 90°C to 140°C.
(8). A sheet-like laminate for packaging, comprising the following layers stacked in sequence along a first direction from an outer surface of the sheet-like laminate to an inner surface of the sheet-like laminate:
   an outer covering layer, and
   the barrier layer according to any one of (1) to (7).
(9). The sheet-like laminate according to (8), wherein:
   the additional layer and the base layer are stacked in sequence along the first direction;
   the base layer comprises:
      a first portion adjacent to the additional layer; and
      a second portion away from the additional layer,
      wherein a material of the second portion is different from a material of the first portion.
(10). The sheet-like laminate according to (9), wherein the outer covering layer mainly comprises the polyolefin material or the degradable polymer.
(11). The sheet-like laminate according to (10), wherein
   the first portion mainly comprises high density polyethylene (HDPE) or the first portion mainly comprises a mixture of low density polyethylene (LDPE) and middle density polyethylene (MDPE), wherein the middle density polyethylene (MDPE) accounts for 30%-80% by weight of the mixture;
   the second portion mainly comprises a mixture of low density polyethylene (LDPE) and metallocene polyethylene (mPE); and
   the outer covering layer mainly comprises low density polyethylene (LDPE).
(12). The sheet-like laminate according to (10), wherein the first portion, the second portion and the outer covering layer all comprise the degradable polymer.
(13). The sheet-like laminate according to (11), wherein:
   a density of the outer covering layer is from 0.89 g/m3 to 0.98 g/m3;
   a Vicat softening temperature of the outer covering layer is higher than a Vicat softening temperature of the base layer, the Vicat softening temperature of the outer covering layer is from 90°C to 150°C, and the Vicat softening temperature of the base layer is from 60°C to 150°C;
   a melt flow index of the outer covering layer is from 1 g/10min to 25 g/10min; and
   a melting temperature of the outer covering layer is from 80°C to 155°C.
(14). The sheet-like laminate according to (11), wherein a total gram weight of the base layer is 10% to 40% of a total gram weight of the sheet-like laminate.
(15). The sheet-like laminate according to (14), wherein the total gram weight of the base layer is from 35 g/m2 to 60 g/m2.
(16). The sheet-like laminate according to (11), wherein a total gram weight of the outer covering layer and the base layer is 12.9% to 53.3% of a total gram weight of the sheet-like laminate.
(17). The sheet-like laminate according to (16), wherein the total gram weight of the outer covering layer and the base layer is from 45 g/m2 to 80 g/m2.
(18). The sheet-like laminate according to any one of (8)-(17), further comprising:
   a carrier layer, provided between the outer covering layer and the barrier layer along the first direction.
(19). The sheet-like laminate according to (18), wherein the carrier layer comprises fibrillated cellulose, or the carrier layer comprises polyvinyl alcohol, or the carrier layer comprises polyvinyl alcohol added with a metal oxide.
(20). The sheet-like laminate according to (18), further comprising:
   a printed layer, provided between the carrier layer and the outer covering layer along the first direction, or provided at a side of the outer covering layer away from the carrier layer along the first direction.
(21). The sheet-like laminate according to (20), wherein the printed layer comprises ink, and the ink comprises an inorganic solvent or an organic solvent, and the inorganic solvent is water.
(22). The sheet-like laminate according to any one of (11) and (13)-(17), wherein a longitudinal stiffness of the sheet-like laminate is from 8 mN*m to 10 mN*m.
(23). A packaging container, obtained by creasing the sheet-like laminate according to any one of (8)-(22).
(24). The packaging container according to (23), comprising:
   a bottom portion and a top portion; and
   a sidewall, provided between the bottom portion and the top portion;
   wherein the sidewall comprises a seam formed by sealing the sheet-like laminate itself, and the seam extends in a second direction from the bottom portion to the top portion, and the second direction is perpendicular to the first direction.
(25). The packaging container according to (24), wherein
   the sheet-like laminate further comprises a carrier layer;
   the carrier layer is located between the barrier layer and the outer covering layer along the first direction, and the carrier layer comprises fibrillated cellulose, and an extension direction of the fibrillated cellulose is parallel to a plane where the sheet-like laminate is located and is perpendicular to the second direction.
(26). The packaging container according to (24) or (25), further comprising:
   an opening, provided in the top portion; and
   a sealing member, configured to seal the opening;
   wherein a material of the sealing member is as same as a material of the outer covering layer, and both the material of the sealing member and the material of the outer covering layer mainly comprise a polyolefin material or a degradable polymer.
(27). The packaging container according to any one of (24)-(26), further comprising:
   a straw and a wrapping covering the straw, wherein the straw is connected to the sidewall by the wrapping;
   wherein a material of the wrapping is as same as a material of the outer covering layer, and both the material of the wrapping and the material of the outer covering layer mainly comprise a polyolefin material or a degradable polymer.
(28). The packaging container according to any one of (24)-(27), wherein a sealing strength at the top portion is less than a sealing strength at the bottom portion, and the sealing strength at the top portion is from 11 N to 26 N.
(29). The packaging container according to any one of (24)-(28), wherein a forming coefficient of the packaging container is from 1.0 m2/kg to 10.0 m2/kg.

In the present invention, the following points should be noted:
(1) The drawings of the embodiments of the present invention only relate to the structures involved in the embodiments of the present invention, and other structures can refer to general designs.
(2) In case of no conflict, the embodiments of the present invention and the features in the embodiments can be combined with each other to obtain new embodiment(s).
(3) The above are merely exemplary implementations of the present invention, and are not intended to limit the scope of protection of the present invention, which is determined by the appended claims.

The above are merely specific implementations of the present invention, but the scope of protection of the present invention is not limited thereto. Any person familiar with the technical field can easily conceive of changes or substitutions within the technical scope disclosed in the present invention, all of which should be included in the scope of protection of the present invention. Therefore, the scope of protection of the present invention should be based on the scope of protection of the claims.

## Claims

1. A barrier layer for packaging, comprising:
a base layer, mainly comprising a polyolefin material or a degradable polymer; and
an additional layer, stacked with the base layer and mainly comprising polyvinyl alcohol and at least one selected from the group of a metal oxide and a non-metal oxide.

2. The barrier layer according to claim 1, wherein the additional layer comprises:
a first layer located on the base layer; and
a second layer located at a side of the first layer away from the base layer, wherein a material of the second layer is different from a material of the first layer;
wherein the first layer comprises the polyvinyl alcohol, and the second layer comprises at least one selected from the group of the metal oxide and the non-metal oxide.

3. The barrier layer according to claim 1 or 2, wherein the polyvinyl alcohol is used as a matrix material of the additional layer, and at least one selected from the group of the metal oxide and the non-metal oxide is added into the matrix material.

4. The barrier layer according to any one of claims 1-3, further comprising a light-shielding material, wherein:
in a case that the base layer mainly comprises the polyolefin material, the light-shielding material is added into or applied onto at least one selected from the group of the base layer and the additional layer; or
in a case that the base layer mainly comprises the degradable polymer, the light-shielding material is added into the additional layer or applied onto at least one selected from the group of the base layer and the additional layer.

5. The barrier layer according to any one of claims 1-4, wherein:
the polyolefin material comprises at least one selected from the group of high density polyethylene (HDPE), middle density polyethylene (MDPE), low density polyethylene (LDPE) and metallocene polyethylene (mPE);
the degradable polymer comprises at least one selected from the group of a biodegradable polymer, a photodegradable polymer and a photo-biodegradable polymer;
the metal oxide is aluminum oxide, and the non-metal oxide is silicon oxide.

6. The barrier layer according to claim 5, wherein an oxygen transmission rate of the barrier layer is from 0.01 cm³/24 hours to 0.5 cm³/24 hours at 23°C and 50% relative humidity.

7. The barrier layer according to claim 5, wherein:
a Vicat softening temperature of the base layer is from 60°C to 150°C;
a melt flow index of the base layer is from 1 g/10min to 25 g/10min; and
a melting temperature of the base layer is from 90°C to 140°C.

8. A sheet-like laminate for packaging, comprising the following layers stacked in sequence along a first direction from an outer surface of the sheet-like laminate to an inner surface of the sheet-like laminate:
an outer covering layer, and
the barrier layer according to any one of claims 1 to 7.

9. The sheet-like laminate according to claim 8, wherein:
the additional layer and the base layer are stacked in sequence along the first direction;
the base layer comprises:
a first portion adjacent to the additional layer; and
a second portion away from the additional layer,
wherein a material of the second portion is different from a material of the first portion.

10. The sheet-like laminate according to claim 9, wherein the outer covering layer mainly comprises the polyolefin material or the degradable polymer.

11. The sheet-like laminate according to claim 10, wherein:
the first portion mainly comprises high density polyethylene (HDPE) or the first portion mainly comprises a mixture of low density polyethylene (LDPE) and middle density polyethylene (MDPE), wherein the middle density polyethylene (MDPE) accounts for 30%-80% by weight of the mixture;
the second portion mainly comprises a mixture of low density polyethylene (LDPE) and metallocene polyethylene (mPE); and
the outer covering layer mainly comprises low density polyethylene (LDPE).

12. The sheet-like laminate according to claim 10, wherein the first portion, the second portion and the outer covering layer all comprise the degradable polymer.

13. The sheet-like laminate according to claim 11, wherein:
a density of the outer covering layer is from 0.89 g/m³ to 0.98 g/m³;
a Vicat softening temperature of the outer covering layer is higher than a Vicat softening temperature of the base layer, the Vicat softening temperature of the outer covering layer is from 90°C to 150°C, and the Vicat softening temperature of the base layer is from 60°C to 150°C;
a melt flow index of the outer covering layer is from 1 g/10min to 25 g/10min; and
a melting temperature of the outer covering layer is from 80°C to 155°C.

14. The sheet-like laminate according to claim 11, wherein a total gram weight of the base layer is 10% to 40% of a total gram weight of the sheet-like laminate.

15. The sheet-like laminate according to claim 14, wherein the total gram weight of the base layer is from 35 g/m² to 60 g/m².

16. The sheet-like laminate according to claim 11, wherein a total gram weight of the outer covering layer and the base layer is 12.9% to 53.3% of a total gram weight of the sheet-like laminate.

17. The sheet-like laminate according to claim 16, wherein the total gram weight of the outer covering layer and the base layer is from 45 g/m² to 80 g/m².

18. The sheet-like laminate according to any one of claims 8-17, further comprising:
a carrier layer, located between the outer covering layer and the barrier layer along the first direction.

19. The sheet-like laminate according to claim 18, wherein the carrier layer comprises fibrillated cellulose, or the carrier layer comprises polyvinyl alcohol, or the carrier layer comprises polyvinyl alcohol added with a metal oxide.

20. The sheet-like laminate according to claim 18, further comprising:
a printed layer, located between the carrier layer and the outer covering layer along the first direction, or located at a side of the outer covering layer away from the carrier layer along the first direction.

21. The sheet-like laminate according to claim 20, wherein the printed layer comprises ink, and the ink comprises an inorganic solvent or an organic solvent, and the inorganic solvent is water.

22. The sheet-like laminate according to any one of claims 11, 13-17, wherein a longitudinal stiffness of the sheet-like laminate is from 8 mN*m to 10 mN*m.

23. A packaging container, obtained by creasing the sheet-like laminate according to any one of claims 8-22.

24. The packaging container according to claim 23, comprising:
a bottom portion and a top portion; and
a sidewall, provided between the bottom portion and the top portion;
wherein the sidewall comprises a seam formed by sealing the sheet-like laminate itself, and the seam extends in a second direction from the bottom portion to the top portion, and the second direction is perpendicular to the first direction.

25. The packaging container according to claim 24, wherein
the sheet-like laminate further comprises a carrier layer;
the carrier layer is located between the barrier layer and the outer covering layer along the first direction, and the carrier layer comprises fibrillated cellulose, and an extension direction of the fibrillated cellulose is parallel to a plane where the sheet-like laminate is located and is perpendicular to the second direction.

26. The packaging container according to claim 24 or 25, further comprising:
an opening, provided in the top portion; and
a sealing member, configured to seal the opening;
wherein a material of the sealing member is as same as a material of the outer covering layer, and both the material of the sealing member and the material of the outer covering layer mainly comprise a polyolefin material or a degradable polymer.

27. The packaging container according to any one of claims 24-26, further comprising:
a straw and a wrapping covering the straw, wherein the straw is connected to the sidewall by the wrapping;
wherein a material of the wrapping is as same as a material of the outer covering layer, and both the material of the wrapping and the material of the outer covering layer mainly comprise a polyolefin material or a degradable polymer.

28. The packaging container according to any one of claims 24-27, wherein a sealing strength at the top portion is less than a sealing strength at the bottom portion, and the sealing strength at the top portion is from 11 N to 26 N.

29. The packaging container according to any one of claims 24-28, wherein a forming coefficient of the packaging container is from 1.0 m²/kg to 10.0 m²/kg.
